Europäisches Patentamt

European Patent Office

Office européen des brevets

(11) Veröffentlichungsnummer: **0 166 265**
A1

(12) **EUROPÄISCHE PATENTANMELDUNG**

(21) Anmeldenummer: 85106716.5

(22) Anmeldetag: 31.05.85

(51) Int. Cl.⁴: **B 65 G 53/12**

(30) Priorität: 22.06.84 DE 3423202

(43) Veröffentlichungstag der Anmeldung: 02.01.86
Patentblatt 86/1

(84) Benannte Vertragsstaaten: **AT BE CH DE FR GB IT LI LU NL**

(71) Anmelder: **Dr. Küttner GmbH & Co. KG,
Bismarckstrasse 67, D-4300 Essen 1 (DE)**

(72) Erfinder: **Boiting, Hans-Hermann, Wibbelstrasse 2,
D-4430 Steinfurth 1 (DE)**

(74) Vertreter: **Hoormann, Walter, Dr. et al, FORRESTER &
BOEHMERT Widenmayerstrasse 4/I,
D-8000 München 22 (DE)**

(54) Verfahren und Einrichtung zum dosierbaren pneumatischen Fördern von Schüttgut aus einem Druckbehälter.

(57) Die Erfindung betrifft ein Verfahren zum dosierbaren pneumatischen Fördern von Schüttgut (1) aus einem mit einer unter Druck stehenden Fördergasquelle verbundenen Druckbehälter (2), dessen Auslass (3) in eine Förderleitung (4) mündet, bei dem der im Druckbehälter (2) vorhandenen Schüttgutsäule unterhalb des Schüttgutniveaus (8) über eine erste Förderleitung (7) Fördergas zuzuführen ist, und bei dem der oberhalb des Schüttgutniveaus (8) befindliche Kopfraum (12) mit einer zweiten Fördergasleitung (13') verbunden ist, wobei das gesamte Fördergas dem Schüttgut (1) unterhalb des Schüttgutniveaus (8) zugeführt wird; und wobei wenigstens ein Teil des durch die Schüttgutsäule über das Schüttgutniveau (8) gelangenden Fördergases der Zwei-Komponenten-Strömung über einen Bypass (13') zuzuführen ist.

0166265

FB 957
30. Mai 1985

Dr. Küttner GmbH & Co. KG, Bismarckstr. 67,
4300 Essen 1

-------------------------------------------------------

Verfahren und Einrichtung zum dosierbaren pneumatischen
Fördern von Schüttgut aus einem Druckbehälter

-------------------------------------------------------

Die Erfindung betrifft ein Verfahren zum dosierbaren
pneumatischen Fördern von Schüttgut aus einem mit
einer unter Druck stehenden Fördergasquelle verbundenen Druckbehälter, dessen Auslaß in eine Förderleitung
für das aus dem zu fördernden Schüttgut und Fördergas
bestehende Zwei-Komponenten-Gemisch mündet, bei dem der
im Druckbehälter vorhandenen Schüttgutsäule unterhalb
ihres (Oberflächen-)Niveaus (= Schüttgutniveau) über
eine erste Fördergasleitung Fördergas zuzuführen ist, und
bei dem der oberhalb des Schüttgutniveaus befindliche
schüttgutfreie Kopfraum des Druckbehälters mit einer

512/29

zweiten Fördergasleitung verbunden ist.

Die Erfindung betrifft weiterhin eine Einrichtung zum dosierbaren pneumatischen Fördern von Schüttgut aus einem das Schüttgut enthaltenden, unter Druck zu setzenden Druckbehälter durch eine mit dessen Auslaß verbundene Förderleitung für das aus Schüttgut und Fördergas bestehende Zwei-Komponenten-Gemisch, wobei dem Druckbehälter unterhalb des Schüttgutniveaus von einer Fördergasquelle über eine erste Fördergasleitung unter Druck stehendes Fördergas zuzuführen ist und in den schüttgutfreien Kopfraum des Druckbehälters oberhalb des Schüttgutniveaus eine zweite Fördergasleitung mündet.

Bei einem bekannten Verfahren sowie einer hierfür bestimmten und geeigneten bekannten Einrichtung der vorstehend wiedergegebenen Gattungen ist die von der unter Druck stehenden Fördergasquelle zum Druckbehälter führende, im allgemeinen schon aus Kostengründen Druckluft führende erste Fördergasleitung mit dem im allgemeinen konisch zum Auslaß verlaufenden, unteren Endabschnitt des Druckbehälters verbunden, wobei der Endabschnitt der ersten Förderleitung den unteren Abschnitt des Druckbehälters gleichsam ringförmig umgibt, so daß die durch die erste Fördergasleitung in den Druckbehälter einströmende Druckluft im Eintrittsbereich einen sog. Lockerungsboden schafft, der das Ausfließen des Schüttgutes aus dem häufig auch als "Sender" bezeichneten Druckbehälter ermöglichen bzw. unterstützen soll.

Die oberhalb des Schüttgutniveaus und damit in den schüttgutfreien Kopfraum des Behälters in diesen mündende zweite Fördergasleitung zweigt bei der bekannten Einrichtung von der ersten Fördergasleitung ab, wobei letztere zwischen dieser Abzweigstelle und dem Druckbehälter mit einem Absperrorgan versehen ist. Durch diese zweite Förderleitung wird bei dem gattungsgemäßen vorbekannten Stand der Technik bei Verwendung von Luft als Fördergas auch als Oberluft bezeichnetes Obergas aus der ersten Fördergasleitung - über die Abzweigstelle - in den schüttgutfreien Kopfraum des Druckbehälters gefördert, wobei auch die zweite Fördergasleitung zwischen der Abzweigstelle von der ersten Fördergasleitung und dem Eintritt in den Druckbehälter mit einem Absperrorgan versehen ist. Die Menge des Obergases wird dabei so vorgesehen, daß der sogenannte Senderdruck, also der Druck des Druckbehälters, der sich an sich mit der Höhe der Schüttgutsäule im Druckbehälter ändert, konstant bleibt.

Bei dem vorstehend diskutierten Stand der Technik zweigt von der ersten Fördergasleitung darüber hinaus noch eine dritte Fördergasleitung ab, die - mehr oder weniger kurz hinter dem Auslaß des Druckbehälters - mit der Förderleitung für das Zwei-Komponenten-Gemisch verbunden ist und ebenfalls ein Absperrorgan aufweist. Das von der dritten Fördergasleitung in die Förderleitung eingespeiste Gas wird üblicherweise als"Sekundärgas" bezeichnet und dient dazu, den Massenstrom der Förderleitung zu steuern sowie das Zwei-Komponenten-Gemisch so aufzubereiten, daß der dem jeweiligen Schüttgut entsprechende Förderzustand (Flug-, Strähnen-, Pfropfen- oder Fließförderung) erreicht wird.

In zahlreichen Einsatzfällen erweist es sich als nachteilig, die für eine gewünschte störungsfreie Förderung erforderliche Gemischaufbereitung innerhalb der Förderleitung (und damit in einem begrenzten Raum bei großer
Feststoff- und Gasgeschwindigkeit) vorzunehmen. Denn
hierdurch können sich Instabilitäten in der Förderung
ergeben, die in einer schwankenden Feststoffkonzentration resultieren und Pulsationen in der Förderleitung
hervorrufen können.

Der vorliegenden Erfindung liegt die Aufgabe zugrunde,
die bekannten gattungsmäßigen Verfahren und Einrichtungen unter Vermeidung der bereits genannten und
weiterer Nachteile u.a. dahingehend zu verbessern,
daß die für eine störungsfreie Förderung erforderliche
Gemischaufbereitung nicht zu den genannten Schwierigkeiten führt, wobei jegliche Instabilitäten und Pulsationen durch wechselweise  Beeinflussung von Primär-
und Sekundärgas vermieden werden sollen. Darüber
hinaus soll der Massenstrom auch bei unterschiedlicher Füllhöhe des Druckbehälters möglichst selbsttätig konstant sein.

Als Lösung des verfahrensmäßigen Teils dieser Aufgabe
ist erfindungsgemäß vorgesehen, daß das gesamte
Fördergas dem im Druckbehälter befindlichen Schüttgut über die erste Förderleitung und damit unterhalb
des Schüttgutniveaus zugeführt wird, und daß wenigstens ein Teil des durch die Schüttgutsäule über
das Schüttgutniveau gelangenden Fördergases (= Obergases) der aus Schüttgut und Fördergas bestehenden
Zwei-Komponenten-Mischung über einen Bypass zuzuführen
ist, für den einrichtungsmäßig die in den Kopfraum
mündende zweite Fördergasleitung zu verwenden ist,
die indes im Gegensatz zu dem weiter oben erörterten
vorbekannten Stand der Technik an ihrem dem Druckgefäß abgekehrten Ende nicht mit der ersten Fördergasleitung, sondern mit der Förderleitung verbunden ist
und dem Kopfraum des Druckgefäßes mithin im Gegensatz
zum Stand der Technik kein Obergas zuführt, sondern
Obergas aus dem Kopfraum des Druckbehälters (in die
Förderleitung) ggf. abführt, wie weiter unten noch im
einzelnen erläutert ist.

Durch den Umstand, daß die gesamte zur Förderung benötigte Gasmenge dem Druckgefäß und damit dem Schüttgut bevorzugt durch einen entsprechend ausgestalteten
Fluidisierungsboden zugeführt wird, kann die Aufbereitung des Zwei-Komponenten-Gemisches bereits vor
der eigentlichen Förderleitung stattfinden und auch
bereits vor dem eigentlichen Förderbeginn eingeleitet
werden, indem ein bevorzugt in der zweiten Fördergasleitung angeordnetes Absperr- bzw. Drosselorgan geöffnet wird, so daß Fördergas durch die erste Fördergasleitung in den Druckbehälter einströmen und nach
dem lockernden Aufbereiten des Schüttgutes beim Durchströmen der Schüttgutsäule aus dem Kopfraum über die
zweite Fördergasleitung bei geöffnetem Absperrorgan
der zweiten Fördergasleitung in die noch schüttgut-
und damit feststoffreie Förderleitung abgeführt wird.

Bevorzugt erfolgt die Einleitung des (gesamten) Fördergases durch die erste Förderleitung nicht nur überhaupt unterhalb des Schüttgutniveaus, sondern am unteren
Endabschnitt der Schüttgutsäule, wobei die erste Förderleitung zweckmäßigerweise an mehreren Stellen und bevorzugt im wesentlichen ringförmig und damit konzentrisch zum unteren Abschnitt des Druckbehälters in
diesen mündet und zur erstrebten Auflockerung und damit

- 6 -    0166265

Aufbereitung als Fluidisierungsboden ausgebildet werden
kann, wie dieses weiter unten noch im einzelnen erläutert
ist.

Der einrichtungsmäßige Teil der obigen Aufgabe wird erfindungsgemäß dadurch gelöst, daß die zweite Fördergasleitung mit Abstand zum Auslaß des Druckbehälters in
die Förderleitung mündet, wobei die Einspeisstelle der
zweiten Fördergasleitung in die Förderleitung in bevorzugter Ausgestaltung der vorliegenden Erfindung als
Injektor ausgebildet ist, wodurch sich eine selbsttätige Einstellung des Massenstromes in der Förderleitung bei unterschiedlichen Füllhöhen des Druckbehälters ergibt.

Bestimmend hierfür ist die Druckdifferenz an dem in
der Förderleitung an der Einspeisstelle der zweiten
Fördergasleitung vorgesehenen Injektor. Die am Injektor wirksame Druckdifferenz bestimmt nämlich die
die zweite Fördergasleitung passierende Gasmenge, die
gleichsam in der Art eines Bypass angeordnet ist, und
beeinflußt dadurch den Massenstrom des Zwei-Komponenten-
Gemisches. Bei großer Füllhöhe im Druckbehälter ist
die Dichte des ausgetragenen Schüttgutes relativ groß.
Hierdurch ist der Druckverlust auf dem Weg vom Auslaßbereich des Druckbehälters zum Eintritt der Förderleitung in den Injektor verhältnismäßig groß und
wächst stärker als der Druckverlust auf dem Weg vom
Auslaßbereich des Druckbehälters über die zweite
Fördergasleitung zum Eintritt der zweiten Fördergasleitung in den Injektor. Dieses hat eine Steigerung
der Druckdifferenz am Injektor zur Folge, so daß die
bei hoher Füllhöhe vorhandene dichtere Schüttung im
Injektor stärker aufgelockert wird.

0166265

Bei verhältnismäßig geringer Füllhöhe im Druckbehälter
ist dagegen die Dichte der ausgetragenen Schüttung
kleiner, so daß die Druckdifferenz am Injektor mit
der Schütt- bzw. Füllhöhe im Druckbehälter entsprechend abnimmt.

Es ist erkennbar, daß der Massenstrom des Zwei-Komponenten-Gemisches bei der erfindungsgemäßen Ausgestaltung entweder über den sog. Senderdruck, d.h.
also den Druck des Druckbehälters, oder aber durch
eine Drosselung der zweiten Fördergasleitung erfolgen
kann, wobei selbstverständlich auch beide Maßnahmen
einander überlagert werden können, falls dieses aus
irgendwelchen Gründen zweckmäßig erscheint.

Da die Gaseinspeisung nur über die erste Fördergasleitung (im allgemeinen durch den bereits erwähnten
Fluidisierungsboden) erfolgt und im Sinne des oben
erörterten Standes der Technik demgemäß keine Primär-
und Sekundärgasströmung vorhanden ist, treten aufgrund des damit geschaffenen geschlossenen Regel- bzw.
Steuerkreises keine Pulsationen bei der Förderung
durch wechselweise Beeinflussung zweier Gasströmungen
auf, wie dieses beim vorbekannten Stand der Technik
der Fall ist.

Bevorzugte Ausgestaltungen der vorliegenden Erfindung
sind in den Unteransprüchen beschrieben.

Die Erfindung ist nachstehend an einem Ausführungsbeispiel unter Bezugnahme auf eine Zeichnung weiter
erläutert. Es zeigt:

Fig. 1   eine vorbekannte gattungsgemäße pneumatische Fördereinrichtung in einer
vereinfachten, systematisierten Darstellung; und

Fig. 2   eine erfindungsgemäße pneumatische
Fördereinrichtung, wobei für gleiche,
gleichbezeichnete  oder gleichwirkende
Teile gleiche Bezugszeichen verwendet
worden sind.

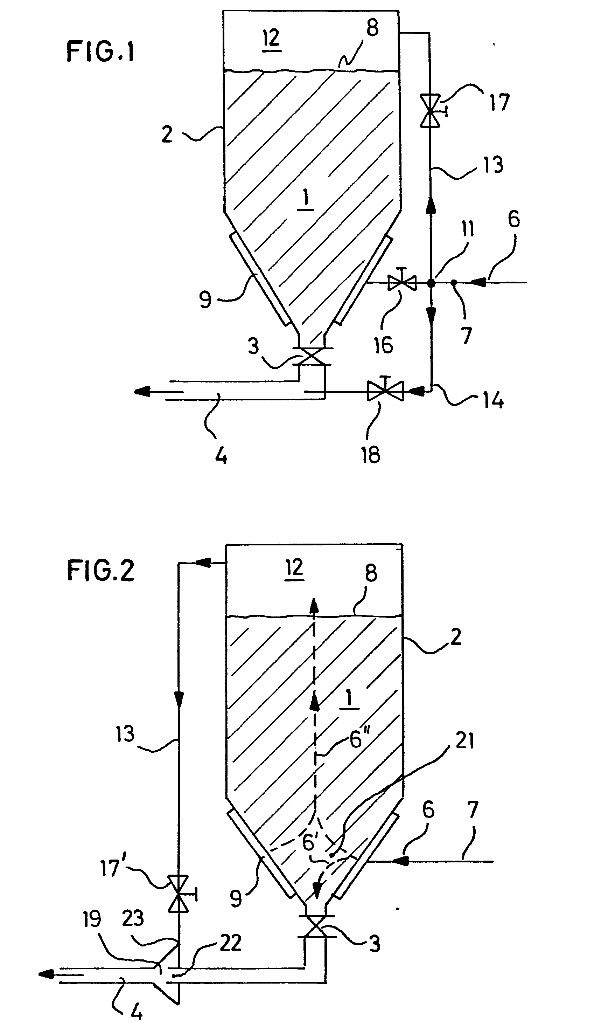

Fig. 1 zeigt in einer vereinfachten, systematisierten
Darstellung eine vorbekannte gattungsgemäße Einrichtung zum dosierbaren pneumatischen Fördern von Schüttgut 1 aus einem mittels Gas unter Druck zu setzenden
Druckbehälter 2 durch eine mit dessen Auslaß 3 verbundene Förderleitung 4 für das aus Schüttgut 1 und
Fördergas bestehende Zwei-Komponenten-Gemisch. Das
Fördergas strömt dem Druckbehälter 2 aus einer nicht
dargestellten Fördergasquelle gemäß dem Pfeil 6 über
eine erste Fördergasleitung 7 zu, und zwar unterhalb
des Schüttgutniveaus 8, nämlich am konisch ausgebildeten, unteren Endabschnitt des Druckbehälters 2, und
zwar über einen Fluidisierungsboden 9, der den unteren
Endabschnitt des Druckbehälters 2 gleichsam ringförmig
umgibt.

Von der ersten Fördergasleitung 7 zweigen an einer
Abzweigstelle 11 zwei weitere Gasleitungen ab, nämlich
zum einen eine in den schüttgutfreien Kopf 12 des
Druckbehälters 2 mündende zweite Fördergasleitung 13
und zum anderen eine zur Förderleitung 4 führende
dritte Fördergasleitung 14. Zwischen der Abzweigstelle
11 und der Einmündung in den Druckbehälter 2 bzw.

0166265

die Förderleitung 4 sind alle drei Fördergasleitungen 7,
13 und 14 jeweils mit einem Absperrorgan 16 bzw. 17
bzw. 18 versehen.

Die vorbekannte Einrichtung gemäß Fig. 1 arbeitet in
der oben bereits im wesentlichen beschriebenen Weise,
es strömt also Fördergas durch die erste Fördergasleitung 7 bei geöffnetem Absperrorgan 16 über den
Fluidisierungsboden 9 in den unteren Endabschnitt des
Druckbehälters 2, aber auch gleichzeitig - bei geöffnetem Absperrorgan 17 - durch die zweite Fördergasleitung 13 als Obergas in den schüttgutfreien Kopf
12 des Druckbehälters 2 sowie ggf. - falls das Absperrorgan 18 geöffnet ist - durch die dritte Fördergasleitung 14 in die Förderleitung 4, in welche das Zwei-
Komponenten-Gemisch bei geöffnetem Auslaß 3 des Druckbehälters 2 eintritt. Dabei wird die Oberluftmenge im
variablen Kopf 12 so eingestellt, daß der sog. Senderdruck, also der Druck des Druckbehälters 2 konstant
bleibt, wobei das durch die erste Fördergasleitung 17
in den Druckbehälter einströmende Fördergas (= Druckluft)
für eine Bildung des sog. Lockerungsbodens sorgen soll,
der das Ausfließen des Schüttgutes 1 aus dem Druckbehälter 2 sicherstellen soll, wobei das durch die dritte
Fördergasleitung 14 in die Förderleitung 4 einströmende
Sekundärgas nicht nur zur Regelung des Massenstromes
dient, sondern das Zwei-Komponenten-Gemisch vor allem
auch aufbereiten muß, wofür ersichtlich nur ein sehr
begrenzter Raum zur Verfügung steht, und wobei im übrigen
große Feststoff- und Gasgeschwindigkeiten herrschen, so
daß sich häufig Instabilitäten mit entsprechend schwankender Feststoffkonzentration und/oder Pulsationen in
der Förderleitung 4 ergeben.

Fig. 2 zeigt ein Ausführungsbeispiel einer erfindungsgemäßen Fördereinrichtung zur Durchführung des erfindungsgemäßen Verfahrens, wobei gleiche bzw. einander entsprechende Teile mit den gleichen Bezugszeichen versehen sind.

Bei der erfindungsgemäßen Einrichtung strömt das
Fördergas gemäß dem Pfeil 6 von einer ebenfalls nicht
dargestellten Druckfördergasquelle durch die erste
Fördergasleitung 7 über einen Fluidisierungsboden 9
in den unteren Endabschnitt des Druckbehälters 2, mit
dem Unterschied zu der Ausgestaltung gemäß Fig. 1,
die gesamte zur Förderung benötigte Gasmenge dem
Druckbehälter 2 und damit dem Schüttgut 1 über die
erste Fördergasleitung 7 zugeführt wird (und nicht
lediglich ein Teil, während der andere Teil, während
der andere Teil, nämlich das Obergas, in den Kopf
geleitet wird, wie dieses beim Stand der Technik der
Fall ist).

Das durch die erste Fördergasleitung 7 eingeleitete Fördergas nimmt mithin - bei geöffnetem Auslaß 3 - zum einen
seinen Weg gemäß der gestrichelten Pfeillinie 6' nach unten
zum Auslaß 3 hin und zum anderen gemäß der gestrichelten
Pfeillinie 6" den Weg durch die Schüttgutsäule, wobei
sich das zugeführte Gas selbstverständlich im wesentlichen
auf die gesamte Schüttgutsäule verteilt.

Die vor- und nachstehend als "zweite Fördergasleitung" bezeichnete, mit dem Kopf 12 des Druckbehälters 2 verbundene,
in Fig. 2 mit 13' bezeichnete Gasleitung, führt mithin - im
Gegensatz zum vorbekannten Stand der Technik gemäß Fig. 1 -
dem Kopf 12 kein Gas zu, sondern Gas aus diesem ab, falls
das in der zweiten Fördergasleitung 13' vorgesehene Absperrorgan 17' geöffnet ist.

Die zweite Fördergasleitung 13' mündet an ihrem dem Druckbehälter 2 abgekehrten Ende in die Förderleitung 4, und
zwar in einen in der Förderleitung 4 vorgesehenen Injektor
19.

Mit der Aufbereitung des Zwei-Komponenten-Gemisches wird
in aller Regel bereits zweckmäßigerweise vor Förderbeginn
begonnen, indem bei noch geschlossenem Auslaß 3 Fördergas
(hier Druckluft) durch die erste Fördergasleitung 7 dem
im Druckbehälter 2 befindlichen Schüttgut 1 zugeführt wird,
wobei das über den Fluidisierungsboden 9 in den Druckbehälter
2 gelangende Gas die Schüttgutsäule nach oben durchsetzt und
dabei auflockert und über den Kopf 12 sowie die zweite Fördergasleitung 13' und das geöffnete Absperrorgan 17' in die
Förderleitung 4 - genauer gesagt in den Injektor 19 - eintritt und abgeführt wird. Dabei kann die für eine optimale
Förderung erforderliche Auflockerung des im Druckbehälter 2

0166265

befindlichen Schüttgutes 1 durch Steuerung des Ventils 17'
erfolgen, wobei - außer über den sog. Senderdruck - mittels
des Ventils 17' auch eine Steuerung bzw. Regelung des
Massenstromes des Zwei-Komponenten-Gemisches bei Förderung
durchgeführt werden kann.

Bei einem gegebenen Senderdruck ist der durch die Förderleitung
4 ausgetragene Massenstrom unabhängig von der Füllhöhe im
Druckbehälter 2 konstant und stellt sich bei sich ändernder
Füllhöhe selbsttätig konstant ein, da bei relativ großer
Füllhöhe des Druckbehälters 2 die Dichte des durch den
Auslaß 3 ausgetragenen Schüttgutes 1 und damit der Druckverlust auf dem Weg vom Auslaßbereich 21 zur Stelle 22
am Injektor 19 groß ist und stärker wächst als in der
zweiten Fördergasleitung 13 vom Auslaßbereich 21 zur Injektoreintrittsstelle 23 der zweiten Fördergasleitung 13' in den
Injektor 19. Hierdurch ist eine verhältnismäßig hohe Druckdifferenz am Injektor 19 vorhanden, so daß die verhältnismäßig dichte Schüttung im Injektor relativ stark aufgelockert
wird. Dagegen ist bei geringer Füllhöhe die Dichte des
ausgetragenen Schüttgutes geringer, so daß damit auch die
Druckdifferenz am Injektor 19 abnimmt und eine lediglich
geringere Auflockerung erfolgt, wie dieses gewünscht wird.

13                0166265

BEZUGSZEICHENLISTE
(LIST OF REFERENCE NUMERALS)

| | | |
|---|---|---|
| 1 | Schüttgut | 1 |
| 2 | Druckbehälter | 2 |
| 3 | Auslaß (von 2) | 3 |
| 4 | Förderleitung | 4 |
| 5 | – | 5 |
| 6,6', 6" | Pfeil | 6 |
| 7 | erste Fördergasleitung | 7 |
| 8 | Schüttgutniveau | 8 |
| 9 | Fluidisierungsboden | 9 |
| 10 | – | 10 |
| 11 | Abzweigstelle | 11 |
| 12 | Kopf | 12 |
| 13, 13' | zweite Fördergasleitung | 13 |
| 14 | dritte Fördergasleitung | 14 |
| 15 | – | 15 |
| 16 | Absperrorgan (in 7) | 16 |
| 17,17' | Absperrorgan (in 13) | 17 |
| 18 | Absperrorgan (in 14) | 18 |
| 19 | Injektor | 19 |
| 20 | – | 20 |
| 21 | Auslaßbereich | 21 |
| 22 | – | 22 |
| 23 | Injektoreintrittsstelle | 23 |
| 24 | | 24 |
| 25 | | 25 |
| 26 | | 26 |
| 27 | | 27 |
| 28 | | 28 |
| 29 | | 29 |
| 30 | | 30 |

Ansprüche
==================

1. Verfahren zum dosierbaren pneumatischen Fördern von
Schüttgut aus einem mit einer unter Druck stehenden
Fördergasquelle verbundenen Druckbehälter, dessen Auslaß in eine Förderleitung mündet, bei dem der im
Druckbehälter vorhandenen Schüttgutsäule unterhalb
des Schüttgutniveaus über eine erste Förderleitung
Fördergas zuzuführen ist, und bei dem der oberhalb
des Schüttgutniveaus befindliche Kopfraum mit einer
zweiten Fördergasleitung verbunden ist, dadurch gekennzeichnet, daß das gesamte Fördergas dem Schüttgut
unterhalb des Schüttgutniveaus zugeführt wird; und
daß wenigstens ein Teil des durch die Schüttgutsäule
über das Schüttgutniveau gelangenden Fördergases
der Zwei-Komponenten-Strömung über einen Bypass zuzuführen ist.

2. Verfahren nach Anspruch 1, dadurch gekennzeichnet,
daß das Fördergas dem Schüttgut am unteren Endabschnitt
der Schüttgutsäule zugeführt wird.

3. Verfahren nach Anspruch 1 oder 2, dadurch gekennzeichnet, daß die Gasströmung in der Bypassleitung
steuerbar ist.

4. Verfahren nach einem oder mehreren der Ansprüche
1 bis 3, dadurch gekennzeichnet, daß das durch die
Bypassleitung strömende Fördergas über einen Injektor

529

in die Förderleitung einzuspeisen ist.

5. Verfahren nach einem oder mehreren der vorhergehenden Ansprüche, dadurch gekennzeichnet, daß der durch die Förderleitung gelangende Massenstrom durch den Systemdruck (Senderdruck) zu steuern ist.

6. Verfahren nach einem oder mehreren der vorhergehenden Ansprüche, dadurch gekennzeichnet, daß der durch die Förderleitung geförderte Massenstrom durch eine Drosselung der durch die Bypassleitung strömenden Fördergasmenge gesteuert wird.

7. Einrichtung zum dosierbaren pneumatischen Fördern von Schüttgut aus einem unter Druck zu setzenden Druckbehälter durch eine mit dessen Auslaß verbundene Förderleitung, wobei dem Druckbehälter unterhalb des Schüttgutniveaus von einer Fördergasquelle über eine erste Förderleitung unter Druck stehendes Fördergas zuzuführen ist, und wobei in den schüttgutfreien Kopfraum des Druckbehälters oberhalb des Schüttgutniveaus eine zweite Fördergasleitung mündet, insbesondere zur Durchführung des Verfahrens nach einem oder mehreren der vorhergehenden Ansprüche, dadurch gekennzeichnet, daß die zweite Fördergasleitung (13') mit Abstand zum Auslaß (3) des Druckbehälters (2) in die Förderleitung (4) mündet.

8. Einrichtung nach Anspruch 7, dadurch gekennzeichnet, daß die erste Fördergasleitung (7) an dem unteren Endabschnitt des Druckbehälters (2) angeschlossen ist.

9. Einrichtung nach Anspruch 7 oder 8, dadurch gekennzeichnet, daß die erste Fördergasleitung (7) an mehreren Stellen in den Druckbehälter (2) mündet.

10. Einrichtung nach Anspruch 9, dadurch gekennzeichnet, daß die erste Fördergasleitung (7) an einem im wesentlichen ringförmigen, konzentrischen Abschnitt (9) in den Druckbehälter (2) mündet.

11. Einrichtung nach Anspruch 9 oder 10, dadurch gekennzeichnet, daß der mit der ersten Fördergasleitung (7) verbundene Abschnitt des Druckbehälters (9) als Fluidisierungsboden ausgebildet ist.

12. Einrichtung nach einem oder mehreren der Ansprüche 7 bis 11, dadurch gekennzeichnet, daß in der zweiten Fördergasleitung (13') ein Absperr- bzw. Drosselorgan (17') angeordnet ist.

13. Einrichtung nach einem oder mehreren der Ansprüche 7 bis 12, dadurch gekennzeichnet, daß die Einspeisstelle der zeiten Fördergasleitung (13') in die Förderleitung (4) als Injektor (19) ausgebildet ist.

FIG.1

FIG.2

0166265

Nummer der Anmeldung

## Europäisches Patentamt

# EUROPÄISCHER RECHERCHENBERICHT

## EINSCHLÄGIGE DOKUMENTE

EP 85106716.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | DE - A1 - 2 806 139 (ERÖMÜ)<br>* Gesamt *<br>-- | 1,2,5,<br>7,8,12 | B 65 G 53/12 |
| A | FR - A1 - 2 236 758 (ALUMINIUM PECHINEY)<br>* Gesamt *<br>-- | 1,2,5,<br>7,8,<br>11,12 | |
| A | DE - B2 - 2 248 859 (CLAUDIUS PETERS AG)<br>* Fig. *<br>---- | 9,10,<br>11 | |

|  |
|---|
| RECHERCHIERTE SACHGEBIETE (Int. Cl. 4) |
| B 65 G |

Der vorliegende Recherchenbericht wurde für alle Patentansprüche erstellt.

| Recherchenort | Abschlußdatum der Recherche | Prüfer |
|---|---|---|
| WIEN | 27-09-1985 | PISSENBERGER |